(19) **Europäisches Patentamt / European Patent Office / Office européen des brevets**

(11) **EP 4 535 104 A1**

(12) **EUROPEAN PATENT APPLICATION**
published in accordance with Art. 153(4) EPC

(43) Date of publication:
**09.04.2025 Bulletin 2025/15**

(21) Application number: **23815688.9**

(22) Date of filing: **08.05.2023**

(51) International Patent Classification (IPC):
**G05B 19/418** (2006.01)

(52) Cooperative Patent Classification (CPC):
**G05B 19/418**

(86) International application number:
**PCT/JP2023/017281**

(87) International publication number:
**WO 2023/233927 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.06.2022 JP 2022090861**
**31.03.2023 JP 2023058310**

(71) Applicant: **OMRON Corporation**
**Kyoto 600-8530 (JP)**

(72) Inventors:
• **NAKAI, Takaki**
**Kyoto-shi, Kyoto 600-8530 (JP)**
• **NAMOSE, Isamu**
**Kyoto-shi, Kyoto 600-8530 (JP)**

(74) Representative: **Mewburn Ellis LLP**
**Aurora Building**
**Counterslip**
**Bristol BS1 6BX (GB)**

(54) **ABNORMALITY DETECTION DEVICE, ABNORMALITY DETECTION METHOD, AND PROGRAM**

(57) An anomaly detection method comprising: acquiring standard values of a plurality of variables for each unit time, the plurality of variables indicating a status of a production line, the standard values being acquired while the production line normally operates; collecting actual values of the plurality of variables for each unit time; calculating for each unit time a statistic representing a degree of deviation of the actual values of the plurality of variables from the standard values of the plurality of variables; and detecting that the production line has an anomaly in response to the statistic departing from a reference range.

FIG.1

## Description

TECHNICAL FIELD

The present disclosure relates to an anomaly detection device, an anomaly detection method, and a program.

BACKGROUND ART

In order to improve production efficiency, it is desirable to detect anomalies of production lines at an early stage. Japanese Patent Laying-Open No. 2019-177783 (PTL 1) discloses a technique for detecting deterioration of ride comfort of railroad vehicles from an increase in Mahalanobis' distance between characteristic data obtained from an acceleration sensor provided on the railroad vehicle and previously acquired unit data.

CITATION LIST

PATENT LITERATURE

PTL 1: Japanese Patent Application Laying-Open No. 2019-177783
PTL 2: Japanese Patent Application Laying-Open No. 2003-044115

NON PATENT LITERATURE

NPL 1: Kishio TAMURA, "Chapter 5. MT system capable of determining directions - TS method and T method," Standardization and Quality Control, 2009, Vol. 62, No. 2
NPL 2: Genichi TAGUCHI, " Objective Function and Generic Function (6) - Prediction by T Method", Quality Engineering, 2005, Vol. 13, No. 3, pp. 5-10
NPL 3: "Idea and Utilization of Quality Engineering in Development and Design Phase - Prototypeless and Testless System Evaluation and Improvement," [online], [searched on March 22, 2023], Internet <https://foundry.jp/bukai/wp-content/uploads/2012/07/e4806f10b0797ec0932d9317dd92a533.pdf>

SUMMARY OF INVENTION

TECHNICAL PROBLEM

A production line includes a wide variety of facilities and a large number of variables are available. Therefore, when the technique disclosed in Japanese Patent Laying-Open No. 2019-177783 (PTL 1) is applied to the production line, confirming whether the production line has an anomaly requires comparing a measurement value with a reference for each of a large number of variables. This results in an increased work to confirm whether the production line has the anomaly.
The present disclosure has been made in view of the above issue and contemplates an anomaly detection device, an anomaly detection method, and a program allowing simple confirmation of whether a target to be monitored at a production site has an anomaly.

SOLUTION TO PROBLEM

According to one example of the present disclosure, an anomaly detection device comprises an acquisition unit, a collection unit, a calculation unit, and a detection unit. The acquisition unit is configured to acquire standard values of a plurality of variables for a unit interval, the plurality of variables indicating a status of a target to be monitored at a production site, the standard values being acquired while the target to be monitored normally operates. The collection unit is configured to collect actual values of the plurality of variables in the unit interval. The calculation unit is configured to calculate a statistic representing a degree of deviation of the actual values of the plurality of variables from the standard values of the plurality of variables. The detection unit is configured to detect that the target to be monitored has an anomaly in response to the statistic departing from a reference range.
According to the above disclosure, the user can confirm a result of the detection unit to easily confirm whether the target to be monitored at the production site has an anomaly.

In the above disclosure, the anomaly detection device further comprises a selection unit configured to select from the plurality of variables an effective variable having a relatively large degree of influence on the statistic.

According to the above disclosure, the user can confirm a result of the selection by the selection unit to determine an effective variable as a candidate for a cause of an anomaly of the target to be monitored. This allows the user to conduct measures such as maintenance for the target to be monitored and a review of a production plan at an early stage to adjust the effective variable.

In the above disclosure, the selection unit is configured to select, as the effective variable, a variable effective in improving estimation accuracy of a T-method estimation model in which the plurality of variables are explanatory variables and the statistic is an objective variable.

According to the above disclosure, an effective variable having a relatively large degree of influence on the statistic can be easily selected.

In the above disclosure, the anomaly detection device further comprises an analysis unit configured to perform a principal component analysis using the actual value of the effective variable and the statistic for each unit interval.

According to the above disclosure, the user can narrow down a variable having a large degree of influence on the statistic among a plurality of effective variables, based on principal component loading acquired through the principal component analysis. This allows the user to conduct measures such as maintenance for a production line and a review of a production plan at an early stage to adjust the variable narrowed down.

In the above disclosure, the analysis unit is configured to select two principal components that maximize a variance of the statistic, and determine a degree of influence of the effective variable on the statistic based on a principal component loading in each of the effective variable and the statistic for the two principal components.

According to the above disclosure, the user can narrow down an effective variable having a large degree of influence on the statistic among a plurality of effective variables based on the determined degree of influence. This allows the user to conduct measures such as maintenance for the target to be monitored and a review of a production plan at an early stage to adjust the effective variable narrowed down.

In the above disclosure, the acquisition unit is configured to: use a virtual model of the target to be monitored to simulate values of the plurality of variables while the target to be monitored is simulatively operated according to a production plan; and acquire, as the standard values, values acquired through the simulation for the unit interval.

Alternatively, in the above disclosure, the acquisition unit may acquire, as the standard values, values of the plurality of variables acquired in the unit interval previously while the target to be monitored normally operates.

In the above disclosure, the statistic is, for example, a standard SN ratio. Thus, the statistic is qualified to represent a similarity of actual values to standard values.

In the above disclosure, the target to be monitored is a production line, and the unit interval is a unit time. According to this disclosure, the user can confirm a result of the detection unit to easily confirm whether the production line has an anomaly.

In the above disclosure, the target to be monitored includes a manufacturing apparatus. According to this disclosure, the user can confirm a result of the detection unit to easily confirm whether the manufacturing apparatus has an anomaly.

In the above disclosure, the manufacturing apparatus repeatedly performs a target operation. The unit interval is a period of time for which the target operation is performed. According to this disclosure, the plurality of variables indicate a status of the manufacturing apparatus for a period of time for which the target operation is performed. The user can easily confirm whether an anomaly is present or absent for each target operation repeatedly performed by the manufacturing apparatus.

According to another example of the present disclosure, an anomaly detection method comprises first to fourth steps. The first step is a step of acquiring standard values of a plurality of variables for a unit interval, the plurality of variables indicating a status of a target to be monitored, the standard values being acquired while the target to be monitored normally operates. The second step is a step of collecting actual values of the plurality of variables in the unit interval. The third step is a step of calculating a statistic representing a degree of deviation of the actual values of the plurality of variables from the standard values of the plurality of variables. The fourth step is a step of detecting that the target to be monitored has an anomaly in response to the statistic deviating from a reference range.

According to another example of the present disclosure, a program causes a computer to perform the anomaly detection method. According to these disclosures as well, the user can easily confirm whether a target to be monitored at a production site has an anomaly.

ADVANTAGEOUS EFFECTS OF INVENTION

According to the present disclosure, a user can easily confirm whether a target to be monitored at a production site has an anomaly.

BRIEF DESCRIPTION OF DRAWINGS

Fig. 1 is a schematic diagram of a configuration of a system including an anomaly detection device according to an embodiment.

Fig. 2 is a diagram showing an example of a production line.

Fig. 3 is a schematic diagram of an example of a hardware configuration of the anomaly detection device according to an embodiment.

Fig. 4 is a diagram of an example of a functional configuration of the anomaly detection device according to an embodiment.

Fig. 5 is a diagram illustrating a process performed by a simulation unit.

Fig. 6 is a diagram illustrating a process performed by a calculation unit.

Fig. 7 is a diagram illustrating an example of a result of selecting effective variables.

Fig. 8 is a diagram illustrating an example of a result of an analysis by an analysis unit.

Fig. 9 is a flowchart of an example of a flow of a process performed by the anomaly detection device.

Fig. 10 is a diagram illustrating a functional configuration of an anomaly detection device according to a first modification.

Fig. 11 is a diagram illustrating an example of a manufacturing apparatus to be monitored.

Fig. 12 is a diagram showing transition of values of parameters for a period of time for which an injection molding operation is performed.

Fig. 13 is a diagram representing standard and actual values of a plurality of variables indicating a status of an injection molding machine 3.

Fig. 14 represents transition of a statistic calculated for each injection molding operation.

Fig. 15 is a diagram showing a result of a principal component analysis using actual values of effective variables and a standard SN ratio for each injection molding period.

Fig. 16 is a diagram showing another example of a manufacturing apparatus to be monitored.

Fig. 17 represents transition of a statistic calculated for each bonding operation.

DESCRIPTION OF EMBODIMENTS

Embodiments of the present invention will now be described in detail with reference to the drawings. In the figures, identical or equivalent components are identically denoted and will not be described repeatedly.

§1. Exemplary Application

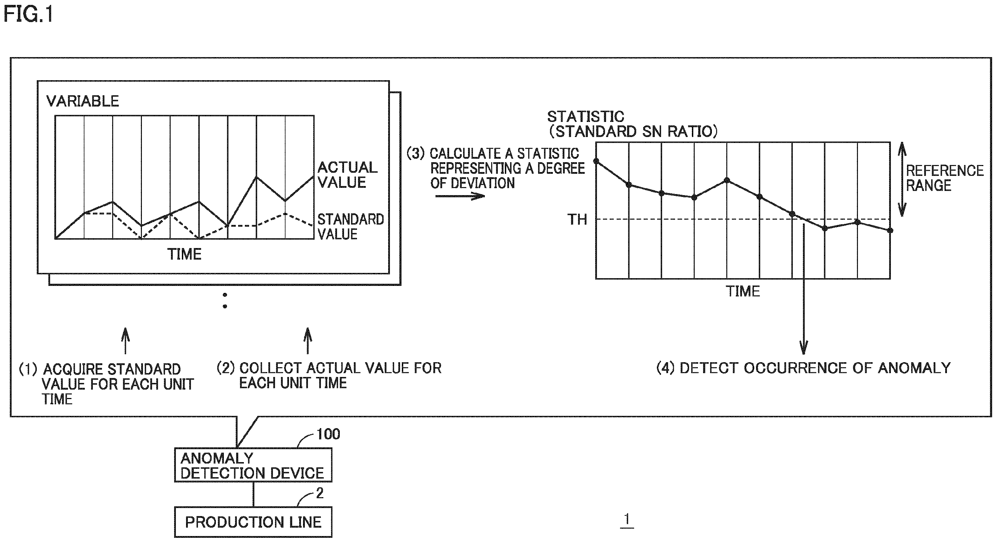

An example of a scene to which the present invention is applied will be described with reference to Fig. 1. Fig. 1 is a schematic diagram illustrating a configuration of a system including an anomaly detection device according to an embodiment. As illustrated in Fig. 1, a system 1 comprises a production line 2 that is an example of a target to be monitored at a production site, and an anomaly detection device 100 that detects that production line 2 has an anomaly. Anomaly detection device 100 is communicably connected to production line 2. The target to be monitored at the production site is not limited to production line 2.

Anomaly detection device 100 acquires standard values of a plurality of variables for each unit time, the plurality of variables indicating a status of production line 2, the standard values being acquired while production line 2 normally operates (step (1)). The plurality of variables include a number of devices, a number of personnel, a yield, and the like for each processing step constituting production line 2. The standard values of the plurality of variables represent a standard status of production line 2. The unit time is, for example, 5 minutes. In addition, the standard values of the plurality of variables may vary for each unit time. For example, the standard values for a unit time immediately after production line 2 starts to operate may be different from those for a unit time several hours after production line 2 starts to operate. In consideration of such a case, anomaly detection device 100 acquires the standard values for each unit time.

Subsequently, when production line 2 comes into service, anomaly detection device 100 collects actual values of the plurality of variables for each unit time (step (2)). Then, anomaly detection device 100 calculates for each unit time a statistic representing a degree of deviation of the actual values of the plurality of variables from the standard values of the plurality of variables (step (3)). In response to the statistic deviating from a reference range, anomaly detection device 100 detects that production line 2 has an anomaly (step (4)).

Even when a status of production line 2 is represented by a large number of variables, step (3) allows a degree of deviation of the current status of production line 2 from the standard status thereof to be represented by a single statistic. As the statistic, for example, a standard SN ratio may be adopted. However, the statistic is not limited to the standard SN ratio, and may be any parameter representing a degree of deviation of actual values from standard values for a plurality of variables. The standard SN ratio decreases as the degree of deviation of the actual values from the standard values for the plurality of variables increases. Therefore, a decrease in the standard SN ratio means that the plurality of variables have actual values deviating from the standard values. A threshold value TH is predetermined to have a value that production line 2 assumes when it changes from normal to abnormal. In this case, the reference range is equal to or larger than threshold value TH. Therefore, a standard SN ratio departing from the reference range (that is, smaller than threshold value TH) means that production line 2 has some anomaly. The user can confirm the result of step (4) to easily confirm whether production line 2 has an anomaly.

§ 2. Specific Example

<Example of Production Line>

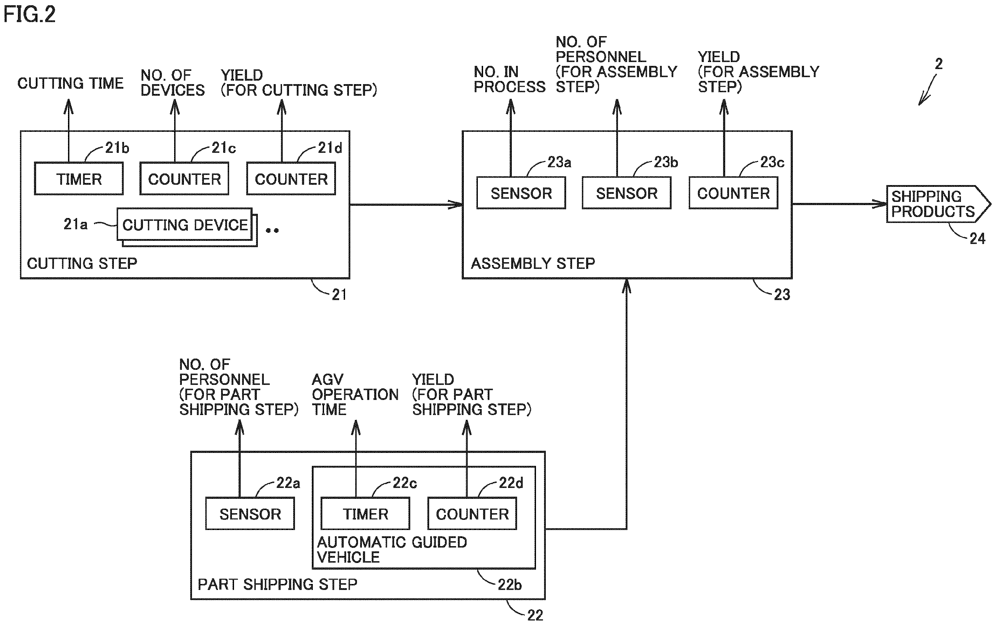

Fig. 2 is a diagram showing an example of the production line. Production line 2 shown in Fig. 2 includes a cutting step 21, a part shipping step 22, an assembly step 23, and a product shipping step 24.

In cutting step 21, a piece of metal is cut to produce a metal part having a predetermined shape, for example. Cutting step 21 includes one or more cutting devices 21a, a timer 21b, and counters 21c and 21d.

One or more cutting devices 21a each output a first signal indicating whether a normal operation is performed, a second signal indicating whether a cutting operation is performed, and a third signal indicating that producing a metal part is completed.

In response to the first signal, counter 21c counts how many cutting devices 21a normally operate in cutting step 21 (hereinafter referred to as a "number of devices").

In response to the second signal, timer 21b counts a period of the unit time for which the cutting operation is performed (hereinafter referred to as a "cutting time").

In response to the third signal, counter 21d counts how many metal parts are produced in the unit time (hereinafter referred to as a "yield (for the cutting step)").

In part shipping step 22, a part externally purchased to be assembled is transported to assembly step 23. Part shipping step 22 includes a sensor 22a and an automatic guided vehicle (AGV) 22b. In part shipping step 22, a worker opens a package to unpack the part externally purchased to be assembled, and subsequently, automatic guided vehicle 22b transports the part.

Sensor 22a counts how many workers are deployed (hereinafter referred to as a "number of personnel (for the part shipping step)") for each unit time. Sensor 22a is, for example, an image sensor, and counts the number of personnel (for the part shipping step) using an image acquired by imaging part shipping step 22.

Automatic guided vehicle 22b includes a timer 22c and a counter 22d. Timer 22c counts a period of the unit time for which the part to be assembled is transported (hereinafter referred to as an "AGV operation time"). Counter 22d counts how many parts to be assembled have been completely transported in the unit time (hereinafter referred to as a "yield (for the part shipping step)").

In assembly step 23, a part to be assembled that is transported from part shipping step 22 is assembled to a metal part that is produced in cutting step 21 to manufacture a product. In assembly step 23, for example, a worker performs an assembling operation, and a finished product is placed on a conveyor belt.

Assembly step 23 is provided with a sensor 23a to count for each unit time how many metal parts transported from cutting step 21 are still unassembled with parts to be assembled (hereinafter referred to as a "number in process"). Sensor 23a is, for example, an image sensor, and counts a number in process by using an image acquired by imaging a tray on which any metal part is placed before a part to be assembled is assembled to the metal part.

Further, assembly step 23 is provided with a sensor 23b to count how many workers are deployed (hereinafter referred to as a "number of personnel (for the assembly step)") for each unit time and a counter 23c to count how many products are manufactured (hereinafter referred to as a "yield (for the assembly step)") in the unit time. Sensor 23b is, for example, an image sensor, and counts the number of personnel (for the assembly step) using an image acquired by imaging assembly step 23. Counter 23c is, for example, a limit switch provided on a conveyor belt on which a product is placed. In product shipping step 24, a product is packaged and shipped.

<Hardware Configuration of Anomaly Detection Device>

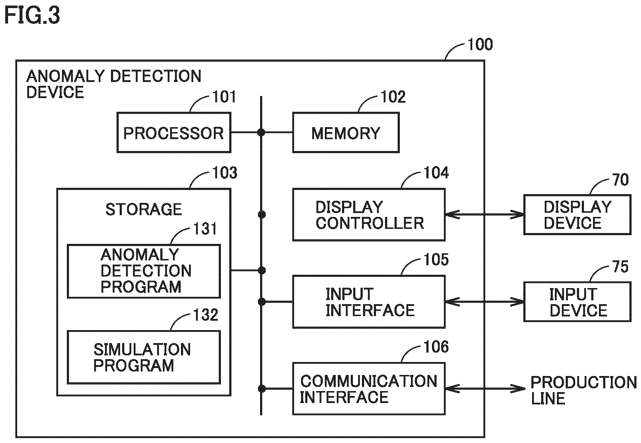

Fig. 3 is a schematic diagram of an example of a hardware configuration of the anomaly detection device according to an embodiment. As shown in Fig. 3, anomaly detection device 100 typically has a structure conforming to a general-purpose computer architecture. Specifically, anomaly detection device 100 includes a processor 101 such as a central processing unit (CPU) or a micro-processing unit (MPU), a memory 102, a storage 103, a display controller 104, an input interface 105, and a communication interface 106. These units are interconnected via a bus to be able to communicate data with one another.

Processor 101 implements a variety of types of processes according to the present embodiment by loading a variety of types of programs stored in storage 103 into memory 102 and executing the programs.

Memory 102 is typically a volatile storage device such as DRAM (Dynamic Random Access Memory), and stores a program read from storage 103 and the like.

Storage 103 is typically a non-volatile magnetic storage device such as a hard disk drive. Storage 103 stores an anomaly detection program 131 and a simulation program 132 executed by processor 101. A variety of types of programs installed in storage 103 are distributed in a state of being stored in a memory card or the like.

Display controller 104 is connected to a display device 70, and, in response to an internal command received from processor 101, outputs a signal to display device 70 for displaying a variety of types of information.

Input interface 105 mediates data transmission between processor 101 and an input device 75, such as a keyboard, a mouse, a touch panel, a dedicated console, etc. That is, input interface 105 receives an operation command entered by a user operating input device 75.

Communication interface 106 mediates data transmission between processor 101 and an external device (e.g., a variety of types of devices provided in production line 2). Communication interface 106 typically includes Ethernet®, a USB (Universal Serial Bus), or the like. Note that a variety of types of programs stored in storage 103 may be downloaded from a distribution server or the like via communication interface 106.

When a computer having a structure conforming to a general-purpose computer architecture, as described above, is used, an OS (Operating System) for providing basic functions for the computer may be installed in addition to an application provided for providing functions according to the present embodiment. In that case, a program according to the present embodiment may invoke necessary ones of program modules that are provided as a part of the OS in a predetermined order at a predetermined timing and perform processing. That is, the program per se according to the present embodiment may not include the above-described modules, and instead cooperate with the OS to perform the processing.

Alternatively, functions provided by executing anomaly detection program 131 and simulation program 132 may be partially or entirely implemented as dedicated hardware circuitry.

<Functional Configuration of Anomaly Detection Device>

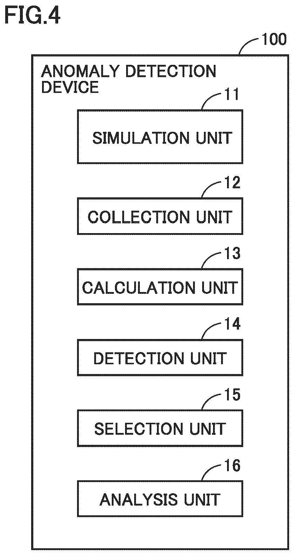

Fig. 4 is a diagram illustrating an example of a functional configuration of the anomaly detection device according to an embodiment. As illustrated in Fig. 4, anomaly detection device 100 comprises a simulation unit 11, a collection unit 12, a calculation unit 13, a detection unit 14, a selection unit 15, and an analysis unit 16. Simulation unit 11 is implemented by processor 101 (see Fig. 3) executing simulation program 132. Collection unit 12 is implemented by communication interface 106 and processor 101 executing anomaly detection program 131. Calculation unit 13, detection unit 14, selection unit 15, and analysis unit 16 are implemented by processor 101 executing anomaly detection program 131.

Simulation unit 11 operates as an acquisition unit to acquire standard values of a plurality of variables for a unit time, the plurality of variables indicating a status of production line 2, the standard values being acquired while production line 2 normally operates. Specifically, simulation unit 11 inputs production plan data indicating a production plan to a virtual model of production line 2 to simulate values of the plurality of variables indicating a status of production line 2 for each unit time (for example of 5 minutes). Simulation unit 11 may perform the simulation using a known technique (for example, Japanese Patent Laying-Open No. 2003-44115 (PTL 2)).

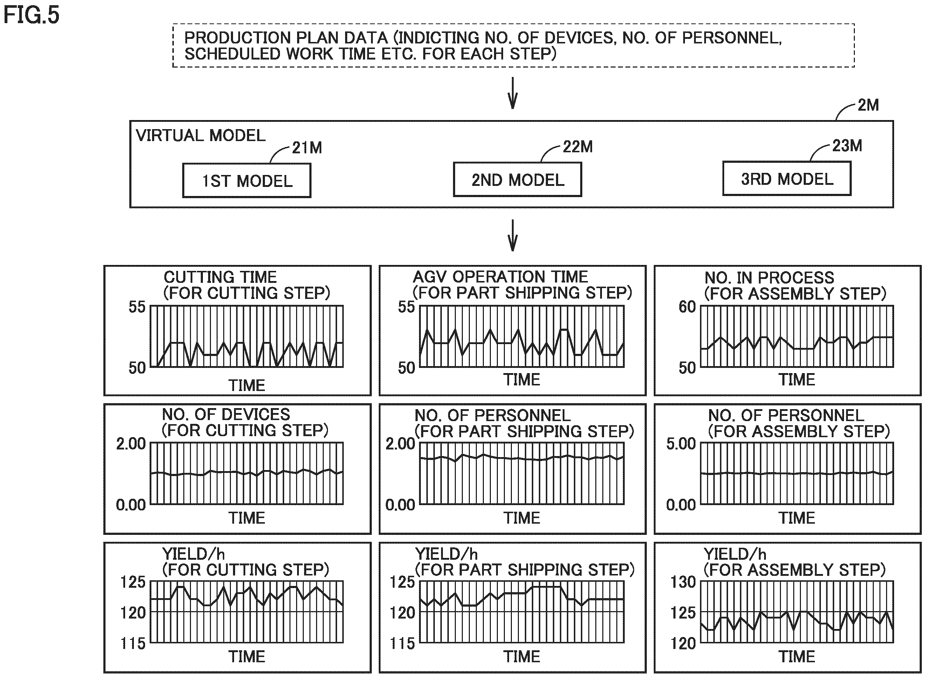

Fig. 5 is a diagram illustrating a process performed by the simulation unit. A virtual model 2M is created in advance according to production line 2. When virtual model 2M receives a variety of types of data indicating a production plan, the virtual model responsively outputs values of a plurality of variables for each unit time, the plurality of variables indicating a status of production line 2, the values being acquired through a simulative operation of the virtual model of production line 2 in accordance with the production plan. As shown in Fig. 5, the plurality of variables indicating a status of production line 2 include "cutting time", "number of devices", "yield (for the cutting step)", "AGV operation time", "number of personnel (for the part shipping step)", "yield (for the part shipping step)", "number in process", "number of personnel (for the assembly step)", and "yield (for the assembly step)".

Virtual model 2M includes a first model 21M corresponding to cutting step 21, a second model 22M corresponding to part shipping step 22, and a third model 23M corresponding to assembly step 23.

First model 21M is created in accordance with the specification of cutting device 21a. First model 21M is defined by the following parameters:

- Cutting speed when cutting device 21a normally operates;
- Amount of cutting to produce one metal part;
- Preparation time after cutting a metal part is completed before cutting a next metal part starts; etc. First model 21M receives production plan data indicating a number of cutting devices 21a to be operated, a scheduled period of time in service, a period of time not in service (or rest period), and the like, and outputs a value for a cutting time, a value for a number of devices, and a value for a yield for cutting step 21 for each unit time.

Second model 22M is created in accordance with the specification of automatic guided vehicle 22b and the specification of a standard work for a worker in part shipping step 22. Second model 22M is defined by the following parameters:

- Time required for a worker performing the standard work to unpack a single part to be assembled;
- Time required for a worker to set the part to be assembled on automatic guided vehicle 22b;
- Time required for automatic guided vehicle 22b to transport a single part to be assembled to assembly step 23; etc.

Second model 22M receives production plan data indicating a number of workers to be deployed in part shipping step 22, a scheduled work period of time, a rest period for workers, etc., and outputs a value for the AGV operation time, a value for a number of personnel, and a value for a yield for part shipping step 22 for each unit time.

Third model 23M is created in accordance with the specification of a standard work performed by a worker. Third model 23M is defined by, for example, a time required for a standard work for completing one product by a worker. Third model 23M receives production plan data indicating a number of workers to be deployed in assembly step 23, a scheduled work period of time, a rest period, etc., data output by first model 21M, and data output by second model 22M, and outputs a value for a number in process, a value for a number of personnel, and a value for a yield for assembly step 23 for each unit time.

Virtual model 2M is a model predicated on that a device and a worker perform a standard work in each step. Accordingly, simulation unit 11 acquires values of the plurality of variables for each unit time (for example of 1 minute, 5 minutes, etc.) that are output from virtual model 2M as values (or standard values) of the plurality of variables acquired while production line 2 normally operates.

Collection unit 12 illustrated in Fig. 4 collects from production line 2 actual values of the plurality of variables indicating the current status of production line 2 for each unit time (for example of 1 minute, 5 minutes, etc.). Specifically, collection unit 12 collects actual values of "cutting time", "number of devices", and "yield (for the cutting step)" for each unit time from timer 21b, counter 21c, and counter 21d, respectively, of cutting step 21. Collection unit 12 collects actual values of "AGV operation time", "number of personnel (for the part shipping step)", and "yield (for the part shipping step)" for each unit time from timer 22c, sensor 22a, and counter 22d, respectively, of part shipping step 22. Collection unit 12 collects actual values of "number in process", "number of personnel (for the assembly step)", and "yield (for the assembly step)" for each unit time from sensor 23a, sensor 23b, and counter 23c, respectively, of assembly step 23.

Calculation unit 13 calculates for each unit time a standard SN ratio as a statistic representing a degree of deviation of actual values of the plurality of variables from standard values of the plurality of variables. The standard SN ratio is calculated based on "Idea and Utilization of Quality Engineering in Development and Design Phase - Prototypeless and Testless System Evaluation and Improvement," [online], [searched on January 4, 2022], Internet <https://foundry.jp/bukai/wp-content/uploads/2012/07/e4806f10b0797ec0932d9317dd92a533.pdf> (NPL 3).

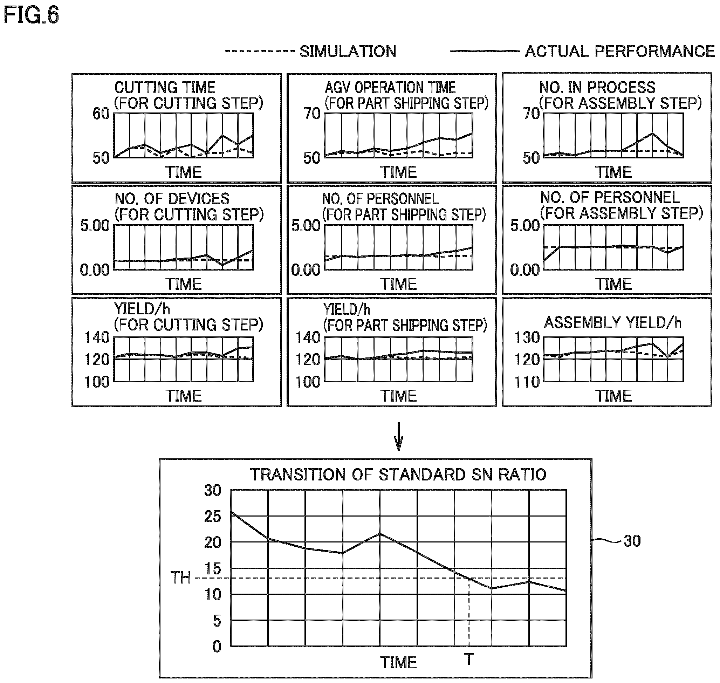

Fig. 6 is a diagram illustrating a process performed by the calculation unit. Fig. 6 shows an example in which "cutting time", "number of devices", "yield (for the cutting step)", "AGV operation time", "number of personnel (for the part shipping step)", "yield (for the part shipping step)", "number in process", "number of personnel (for the assembly step)", and "yield (for the assembly step)" are used as a plurality of variables. Calculation unit 13 calculates for each unit time a standard SN ratio of the actual values of the plurality of variables collected by collection unit 12 to the standard values of the plurality of variables calculated by simulation unit 11. Calculation unit 13 may cause display device 70 to display a graph 30 representing how the calculated standard SN ratio transitions. The user can confirm graph 30 to see how production line 2 transitions in status.

Detection unit 14 illustrated in Fig. 4 uses the standard SN ratio calculated by calculation unit 13 to detect that production line 2 has an anomaly. The standard SN ratio is smaller for a larger degree of deviation between standard values and actual values for the plurality of variables. Accordingly, detection unit 14 detects that production line 2 has an anomaly in response to the standard SN ratio deviating from the reference range (that is, being smaller than threshold value TH). For example, in the case of graph 30 shown in Fig. 6, detection unit 14 detects that production line 2 has an anomaly at a timing T, that is, when the standard SN ratio is smaller than threshold value TH. Detection unit 14 may cause display device 70 to display error notification in response to detecting that production line 2 has an anomaly. This ensures that the user can see that production line 2 has an anomaly.

In response to detection unit 14 detecting an anomaly, selection unit 15 illustrated in Fig. 4 selects from the plurality of variables an effective variable having a relatively large degree of influence on the standard SN ratio. Specifically, selection unit 15 selects, as an effective variable, a variable effective in improving estimation accuracy of a T-method estimation model in which the plurality of variables are explanatory variables and the standard SN ratio is an objective variable. The user can thus select the effective variable as a candidate for a cause of an anomaly of production line 2 and can resolve the anomaly of production line 2 at an early stage. Selection unit 15 may select a plurality of effective variables.

The T-method is one of the multivariate analysis methods provided by a Statistician Dr. Genich Taguchi, and is a method of estimating a value of one objective variable from values of a plurality of explanatory variables (See Kishio TAMURA, "Chapter 5. MT system capable of determining directions - TS method and T method," Standardization and Quality Control, 2009, Vol. 62, No. 2 (NPL 1)).

Selection unit 15 generates a T-method estimation model by subjecting to data processing in the T-method a data set indicative of the actual values of the plurality of variables and the value of the standard SN ratio for each unit time. In the data processing in the T method, a simple regression is performed for each explanatory variable and weighted averaging is performed for each explanatory variable to generate a T method estimation model to calculate an estimated value of an objective variable. The estimation model obtained through the data processing in the T method is represented by the following expression (1).

[Math. 1]

$$ \mathrm{M_i} = \left( \frac{\eta_1}{\beta_1 \sum_{j=1}^{k} \eta_j} \right) X_{i1} + \left( \frac{\eta_2}{\beta_2 \sum_{j=1}^{k} \eta_j} \right) X_{i2} + \cdots + \left( \frac{\eta_k}{\beta_k \sum_{j=1}^{k} \eta_j} \right) X_{ik} \quad (1) $$

In expression (1), $X_{ij}$ is a value after a j-th explanatory variable for an i-th unit time is standardized. Standardization is a process of subtracting an average value of values of a variable indicated by a data set. $\eta_j$ represents an SN ratio for the j-th explanatory variable. SN ratio $\eta_j$ indicates linearity between the value of the j-th explanatory variable and the value of the objective variable, and represents accuracy of estimation of the value of the objective variable. $\beta_j$ represents a constant of proportionality for a simple regression. $M_i$ is an estimated value after an objective variable for the i-th unit time is standardized.

For example, selection unit 15 uses a two-level orthogonal array to select from a plurality of variables an effective variable effective in improving estimated accuracy of an objective variable. Selection unit 15 selects the effective variable for example using a method described in Genichi TAGUCHI, "Objective Function and Generic Function (6) - Prediction by T Method", Quality Engineering, 2005, Vol. 13, No. 3, pp. 5-10 (NPL 2). By selecting an effective variable using the two-level orthogonal array, which is also referred to as "item selection," for each explanatory variable, which is also referred to as an "item," an explanatory variable effective in improving accuracy of estimating an objective variable can be selected and an explanatory variable having a negative effect on (or reducing) accuracy of estimating the objective variable can be excluded. Furthermore, by using the two-level orthogonal array, an effect when there is an interaction between items can be considered. Specifically, according to Genichi TAGUCHI, "Objective Function and Generic Function (6) - Prediction by T Method", Quality Engineering, 2005, Vol. 13, No. 3, pp. 5-10 (NPL 2), an orthogonal array is created to provide either one of two levels of using and not using for each of a plurality of explanatory variables (or items), and a total SN ratio is calculated for each row of the orthogonal array. Based on a total SN ratio when each item is used and that when it is not used, selection unit 15 determines the item's effect on estimating an objective variable and whether the item has a negative effect on estimating the objective variable. Based on the result of the determination, selection unit 15 selects an effective variable from the plurality of variables.

Alternatively, selection unit 15 may not use the two-level orthogonal array; rather, the selection unit may generate a plurality of patterns each indicating a combination of two or more of the plurality of variables. Then, selection unit 15 may generate a T-method estimation model in which actual values of the two or more variables indicated by each pattern are explanatory variables and the standard SN ratio is an objective variable, and the selection unit may select an effective variable based on total SN ratios in magnitude of the generated T-method estimation model. For example, selection unit 15 selects a variable included in a pattern having a maximum total SN ratio as an effective variable.

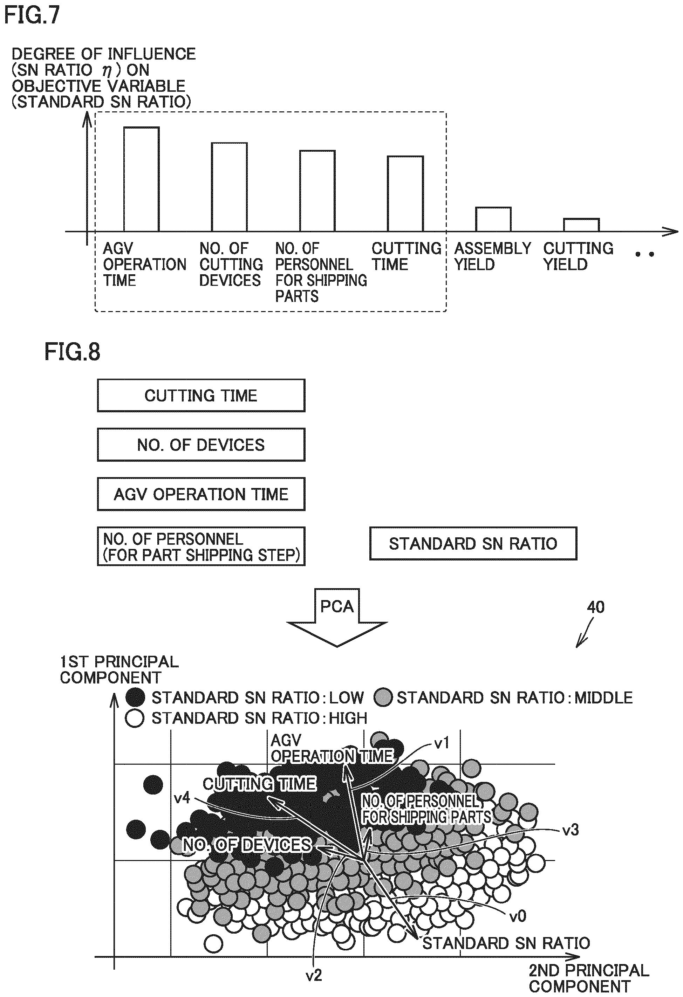

Fig. 7 is a diagram illustrating an example of a result of selecting an effective variable. In the example shown in Fig. 7, "AGC operation time", "number of devices", "number of personnel (for shipping parts)" and "processing time" are selected as effective variables. In Fig. 7 the vertical axis represents SN ratio $\eta_j$ of each variable in the T-method estimation model using all of the plurality of variables. As has been described above, SN ratio $\eta_j$ of each variable represents a degree of influence on the objective variable or the standard SN ratio.

Analysis unit 16 shown in Fig. 4 performs a principal component analysis (PCA) using an actual value of an effective variable and a standard SN ratio for each unit time.

Fig. 8 is a diagram illustrating an example of a result of the analysis by the analysis unit. Fig. 8 shows a result of the principal component analysis for "AGC operation time", "number of devices", "number of personnel (for shipping parts)", "processing time", and "standard SN ratio" for each unit time.

Analysis unit 16 selects two principal components that maximize variance of the standard SN ratio. Specifically, analysis unit 16 selects a first principal component having a maximum contribution ratio and a second principal component having a second largest contribution ratio.

Alternatively, analysis unit 16 may cause display device 70 to display a scatter diagram for each combination of two principal components of a plurality of principal components acquired through the principal component analysis, and select two principal components of a combination corresponding to a scatter diagram designated by the user. The scatter diagram plots a point corresponding to principal component scores of two principal components acquired from values of "AGC operation time", "number of devices", "number of personnel (for shipping parts)", "processing time", and "standard SN ratio" for each unit time. In the scatter diagram, analysis unit 16 may vary a form of displaying each point depending on the value of the standard SN ratio corresponding to the point. For example, analysis unit 16 displays a point with a standard SN ratio having a value within a first (or low) range in black, a point with a standard SN ratio having a value within a second (or middle) range larger than the first range in gray, and a point with a standard SN ratio having a value within a third (or high) range larger than the second range in white. Thus, the user may confirm a scatter diagram for each combination and select a scatter diagram with standard SN ratios most separated in magnitude.

As illustrated in Fig. 8, analysis unit 16 causes display device 70 to display a biplot 40 of two selected principal components. Biplot 40 superimposes and thus displays principal component loadings on principal component scores. As described above, a form of displaying a point corresponding to principal component scores of two principal components acquired from data for each unit time differs depending on the value of the standard SN ratio. Thus, by using two selected principal components, it is understood that the standard SN ratios are separated in magnitude.

Principal component loading indicates a correlation between a value of a variable and a principal component score. Larger principal component loading indicates that a principal component and a variable are correlated with each other more strongly. As shown in Fig. 8, principal component loading for each variable is represented by a vector. A vector v0 represents principal component loading of "standard SN ratio". A vector v1 represents principal component loading of "AGC operation time". A vector v2 represents principal component loading of "number of devices". A vector v3 represents principal component loading of "number of personnel (for shipping parts)". A vector v4 represents principal component loading of "cutting time".

By confirming biplot 40, the user can see which variable affects a decrease in the standard SN ratio. That is, the user can determine a variable corresponding to a vector of vectors v1 to v4 having a large component parallel to vector v0 as a variable affecting a decrease in the standard SN ratio. For example, in biplot 40 shown in Fig. 8, the user can determine variables "AGV operation time" and "cutting time" corresponding to vectors v1 and v4, which are not orthogonal to the direction of vector v0 and are large in magnitude, as variables affecting a decrease in the standard SN ratio.

A variable affecting a decrease in the standard SN ratio is considered to be a cause of an anomaly of production line 2. The user can adjust the variable affecting the decrease in the standard SN ratio to eliminate the anomaly of production line 2.

Note that analysis unit 16 may determine a degree of influence of an effective variable on a standard SN ratio based on principal component loading in each of the effective variable and the standard SN ratio for selected two principal components, and cause display device 70 to display the determined degree of influence. Specifically, analysis unit 16 calculates, for each of a plurality of effective variables, an absolute value of an inner product of the vectors representing the principal component loadings of the effective variables (i.e., v1 to v4 in Fig. 8) and the vector indicating the principal component loading of "standard SN ratio" (i.e., vector v0 in Fig. 8) as a degree of influence on the standard SN ratio. The user can confirm the degree of influence displayed on display device 70 to easily identify a variable affecting a decrease in the standard SN ratio.

<Flow of Process by Anomaly Detection Device>

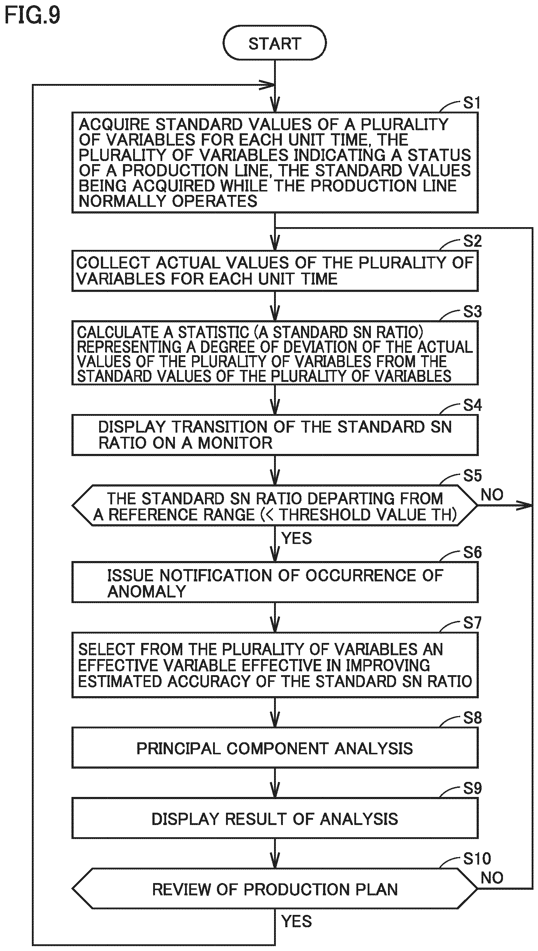

Fig. 9 is a flowchart of an example of a flow of a process performed by the anomaly detection device. As indicated in Fig. 9, initially, processor 101 of anomaly detection device 100 acquires standard values of a plurality of variables for each unit time, the plurality of variables indicating a status of production line 2, the standard values being acquired while production line 2 normally operates (step S1). In the present embodiment, processor 101 inputs production plan data to virtual model 2M to acquire, as the standard values, values of the plurality of variables for each unit time that are output from virtual model 2M.

Subsequently, processor 101 collects actual values of the plurality of variables for each unit time from production line 2 (step S2). Processor 101 calculates for each unit time a standard SN ratio representing a degree of deviation of the actual values of the plurality of variables from the standard values of the plurality of variables (step S3). Processor 101 causes display device 70 to display graph 30 indicating how the standard SN ratio transitions (step S4).

Subsequently, processor 101 determines whether the standard SN ratio departs from the reference range (that is, whether it is smaller than threshold value TH) (step S5). When the standard SN ratio is within the reference range (that is, equal to or larger than threshold value TH) (NO in step S5), the process returns to step S2.

When the standard SN ratio departs from the reference range (YES in step S5), processor 101 issues notification indicating that production line 2 has an anomaly (step S6). For example, processor 101 causes display device 70 to display an error notification screen.

Subsequently, processor 101 selects, from the plurality of variables, an effective variable effective in improving estimation accuracy of a T-method estimation model in which the actual values of the plurality of variables are explanatory variables and the standard SN ratio is an objective variable (step S7). Processor 101 may cause display device 70 to display a screen indicating a result of the selection. An effective variable is an item important for the standard SN ratio's estimated accuracy. The user can confirm the result of the selection to determine an effective variable as a candidate for a cause of an anomaly of production line 2. This allows the user to perform maintenance for production line 2 to adjust the effective variable, and review the production plan.

Subsequently, processor 101 performs a principal component analysis using an actual value of the effective variable and a standard SN ratio for each unit time (step S8). Processor 101 causes display device 70 to display a result of the principal component analysis (step S9). For example, processor 101 causes display device 70 to display biplot 40 shown in Fig. 8. Alternatively, processor 101 may determine a degree of influence of the effective variable on the standard SN ratio based on principal component loading in each of the effective variable and the standard SN ratio, and cause display device 70 to display the determined degree of influence. Thus, the user can narrow down a variable of a plurality of effective variables that has a large degree of influence on the standard SN ratio. The user can perform maintenance for production line 2 to adjust the variable narrowed down. For example, the user performs maintenance for cutting device 21a in cutting step 21. Alternatively, the user may review the production plan. For example, the user may adjust a number of workers deployed in assembly step 23, a number of cutting devices 21a operating in cutting step 21, etc.

Subsequently, processor 101 determines whether the production plan has been reviewed (step S10). Specifically, processor 101 determines that the production plan has been reviewed in response to new production plan data being received.

When the production plan is reviewed (YES in step S10), the process returns to step S1. As a result, the standard values of the plurality of variables for each unit time indicating a status of the production line are updated. When the production plan is not reviewed (NO in step S10), the process returns to step S2.

<First Modification>

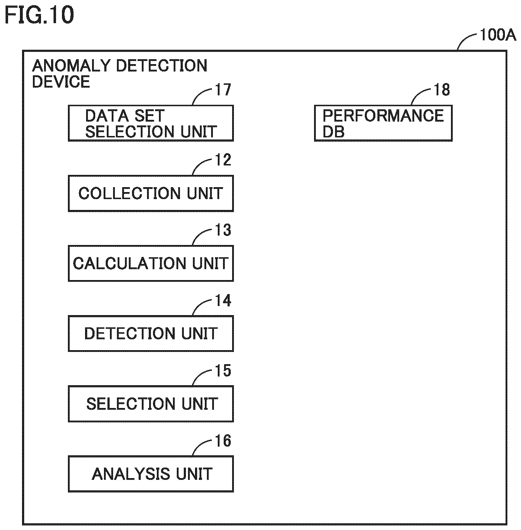

Fig. 10 is a diagram of a functional configuration of an anomaly detection device according to a first modification. Fig. 10 shows an anomaly detection device 100A comprising a hardware configuration similar to that of anomaly detection device 100 (see Fig. 3). As illustrated in Fig. 10, anomaly detection device 100A is different from anomaly detection device 100 illustrated in Fig. 4 in that a data set selection unit 17 and a performance database 18 are provided instead of simulation unit 11. Data set selection unit 17 is implemented by processor 101 executing anomaly detection program 131. Performance database 18 is implemented by storage 103.

Performance database 18 includes one or more data sets indicating values of a plurality of variables for each unit time, the values being acquired previously while production line 2 normally operates.

When production line 2 has a variable operating condition, information indicating the operating condition of production line 2 may be added to each data set. The operating condition includes a number of cutting devices 21a operating in cutting step 21, a number of workers deployed in part shipping step 22, a number of workers deployed in assembly step 23, etc.

Data set selection unit 17 operates as an acquisition unit to acquire standard values of a plurality of variables indicating a status of production line 2 for the unit time, the standard values being acquired while production line 2 normally operates. Specifically, data set selection unit 17 selects one or more data sets from performance database 18 in response to an instruction received from a user. For example, the user may designate from performance database 18 one or more data sets acquired while production line 2 operates in an ideal state. Alternatively, when the information indicating the operating condition is added to each data set, the user designates one or more data sets to which information indicating an operating condition that matches the production plan is added.

Data set selection unit 17 acquires, as standard values, values of the plurality of variables for each unit time that are indicated by the selected one or more data sets. When one data set is selected, data set selection unit 17 acquires as a standard value a value indicated by the data set. When a plurality of data sets are selected, data set selection unit 17 acquires, for each of the plurality of variables, as a standard value, a representative value (for example, an average value, a median value, etc.) of values for each unit time that are indicated by the plurality of data sets.

According to the first modification, data set selection unit 17 acquires, as standard values, values of a plurality of variables for each unit time, the values being acquired previously while production line 2 normally operates. As a result, a standard SN ratio calculated by calculation unit 13 represents a degree of deviation between the current status of production line 2 and a status that the production line had when it normally operated. Therefore, a standard SN ratio smaller than the threshold value means that production line 2 has some anomaly. The user can confirm a result of detection by detection unit 14 to easily confirm whether the production line has an anomaly.

The flow of the process performed by anomaly detection device 100A according to the first modification is the same as that of the flowchart illustrated in Fig. 9. When the information indicating the operating condition is not added to the data set(s), step S10 is not performed, and the process returns to step S1 after step S9.

<Second Modification>

In the embodiment shown in Fig. 1, a target to be monitored at a production site is production line 2. However, the target to be monitored is not limited to production line 2. For example, the target to be monitored may be a manufacturing apparatus. Further, anomaly detection device 100 according to the embodiment illustrated in Fig. 1 calculates a statistic representing a degree of deviation of actual values of a plurality of variables from standard values of the plurality of variables for each unit time. However, anomaly detection device 100 may calculate the statistic for each unit interval. The unit interval is, for example, a period of time for which a target operation is performed by the manufacturing apparatus.

(First Example of Manufacturing Apparatus)

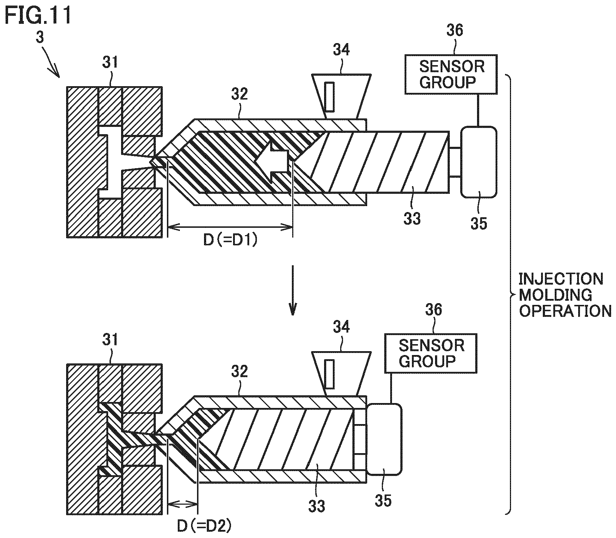

Fig. 11 is a diagram showing an example of a manufacturing apparatus to be monitored. Fig. 11 shows an injection molding machine 3 as the manufacturing apparatus to be monitored. Injection molding machine 3 includes a mold 31, a cylinder 32, a screw 33, a hopper 34, a screw driving device 35, and a sensor group 36.

Cylinder 32 is a cylindrical member and has an internal space fed with resin. Hopper 34 feeds resin into the internal space of cylinder 32. Screw 33 is inserted into the internal space of cylinder 32. Screw driving device 35 is connected to a proximal end portion of screw 33. Screw 33 rotates as controlled by screw driving device 35 and is movable in the longitudinal direction of cylinder 32. Sensor group 36 measures values of a variety of types of parameters indicating a status of injection molding machine 3.

Injection molding machine 3 repeatedly performs an injection molding operation. The injection molding operation is an operation of injecting the resin accommodated in the internal space of cylinder 32 into mold 31 by moving screw 33 from a state shown in the upper portion of Fig. 11 to a state shown in the lower portion of the same figure.

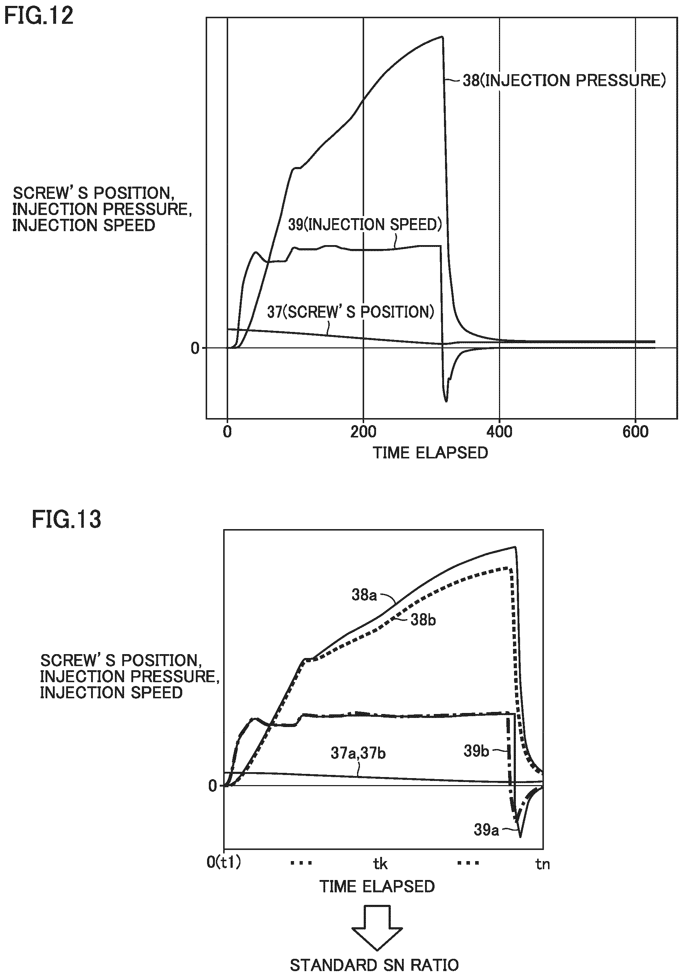

Fig. 12 is a diagram showing transition of values of parameters for a period of time for which the injection molding operation is performed. Hereinafter, a period of time for which the injection molding operation is performed will be referred to as an "injection molding period". In the graph shown in Fig. 12, the horizontal axis represents a time elapsing after the injection molding operation starts, and the vertical axis represents values of a variety of types of parameters measured by sensor group 36. As shown in Fig. 12, sensor group 36 measures the screw's position, injection pressure, and injection speed as parameters indicating a status of injection molding machine 3. The screw's position is represented for example by a distance D between a distal end of cylinder 32 and that of screw 33 (see Fig. 11). In Fig. 12, a line 37 indicates a transition of the screw's position during the injection molding period. A line 38 indicates a transition of the injection pressure. A line 39 indicates a transition of the injection speed.

When a target to be monitored is injection molding machine 3, the anomaly detection device according to the second modification acquires standard values of a plurality of variables indicating a status of injection molding machine 3 during the injection molding period while injection molding machine 3 normally operates. For example, simulation unit 11 shown in Fig. 4 uses a virtual model of injection molding machine 3 to simulate values of the plurality of variables while injection molding machine 3 is simulatively operated according to a production plan, and the simulation unit acquires as the standard values the values of the plurality of variables acquired in the injection molding operation through the simulation. Alternatively, data set selection unit 17 shown in Fig. 10 acquires, as the standard values, values of the plurality of variables acquired in an injection molding period previously while injection molding machine 3 normally operates. The plurality of variables include, for example, the screw's position, injection pressure, and injection speed for each of times t1, t2, ..., and tn elapsing after the injection molding operation starts. In that case, the plurality of variables includes $3 \times n$ variables.

When the target to be monitored is injection molding machine 3, collection unit 12 acquires actual values of the plurality of variables indicating a status of injection molding machine 3 for each injection molding period. Collection unit 12 may acquire the actual values of the plurality of variables from sensor group 36, or may acquire the actual values of the plurality of variables from a control device (e.g., a PLC) (not shown) that controls injection molding machine 3.

Fig. 13 represents standard and actual values of the plurality of variables indicating statuses of injection molding machine 3. A line 37a represents standard values of the screw's position (n variables) at times t1, t2, ..., tn elapsing after the injection molding period starts. A line 38a represents standard values of injection pressure (n variables) at times t1, t2, ..., tn. A line 39a represents standard values of injection speed (n variables) at times t1, t2, ..., tn. A line 37b represents actual values of the screw's position (n variables) at times t1, t2, ..., tn elapsing after the injection molding period starts. A line 38b represents actual values of injection pressure (n variables) at times t1, t2, ..., tn. A line 39b represents actual values of injection speed (n variables) at times t1, t2, ..., tn.

Calculation unit 13, detection unit 14, selection unit 15, and analysis unit 16 use the standard and actual values of the $3 \times n$ variables indicated in Fig. 13 to perform the process described in the above embodiment. For example, as illustrated in Fig. 13, calculation unit 13 calculates a standard SN ratio as a statistic indicating the degree of deviation of the actual values of the $3 \times n$ variables from the standard values of the $3 \times n$ variables.

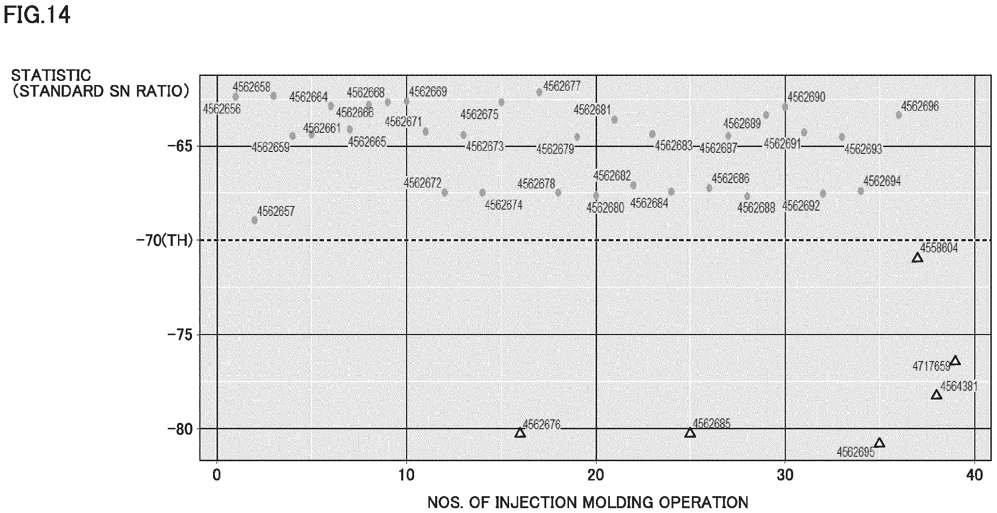

Fig. 14 represents a transition of a statistic calculated for each injection molding operation. Fig. 14 shows a graph in which the horizontal axis indicates injection molding operation numbers and the vertical axis represents a statistic (or the standard SN ratio) calculated by calculation unit 13. In the graph, 7-digit numbers each corresponding to a point represent numbers of products produced through the injection molding operation. Many of products manufactured through injection molding operations with a standard SN ratio departing from a reference range (that is, smaller than threshold value TH) were confirmed to be defective. The user can confirm whether there is a defective product based on error notification received from detection unit 14.

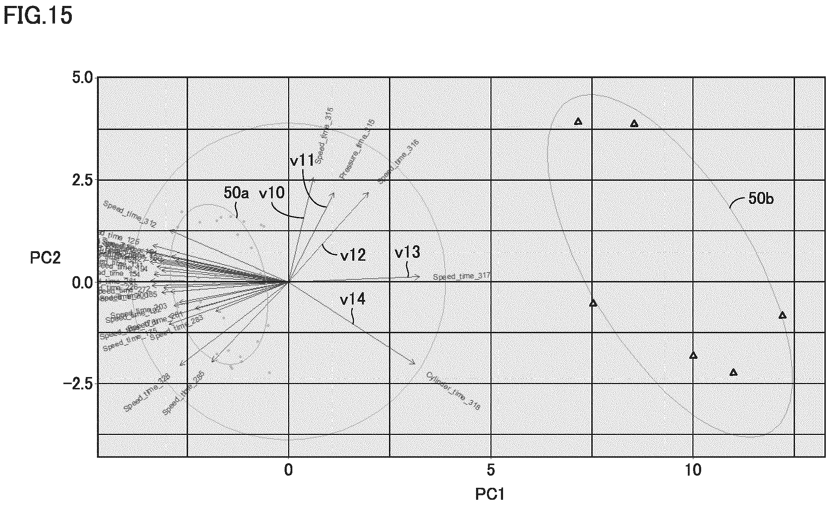

Fig. 15 represents a result of a principal component analysis using actual values of effective variables and a standard SN ratio for each injection molding period. Fig. 15 shows a biplot of two principal components PC1 and PC2 selected by analysis unit 16. The biplot shown in Fig. 15 plots for each injection molding operation a point corresponding to principal component scores of the two principal components as acquired from the actual values of the effective variables. Points corresponding to injection molding operations with a standard SN ratio falling within the reference range (that is, equal to or larger than threshold TH) concentrate within an enclosure 50a. On the other hand, points corresponding to injection molding operations with a standard SN ratio departing from the reference range (that is, smaller than threshold value TH) concentrate within an enclosure 50b. From this matter, by confirming the biplot shown in Fig. 15, the user can easily identify an injection molding operation in which an anomaly occurred.

Further, by confirming the biplot shown in Fig. 15, the user can consider a mechanism of generating the anomaly. In the biplot shown in Fig. 15, vectors v10, v11, v12, v13, and v14 corresponding to variables "Speed_time_315 (injection speed at elapsed time t315)", "Pressure_time_315 (injection pressure at elapsed time t315)", "Speed_time_316 (injection speed at elapsed time t316)", "Speed_time_317 (injection speed at elapsed time t317)", and "Cylinder_time_318 (the screw's position at elapsed time t318)", respectively, are directed in directions different from those of vectors corresponding to other variables. Therefore, the user can see that the injection speed and screw's position around elapsed times t315 to t318 significantly contribute to an anomaly of injection molding machine 3.

(Second Example of Manufacturing Apparatus)

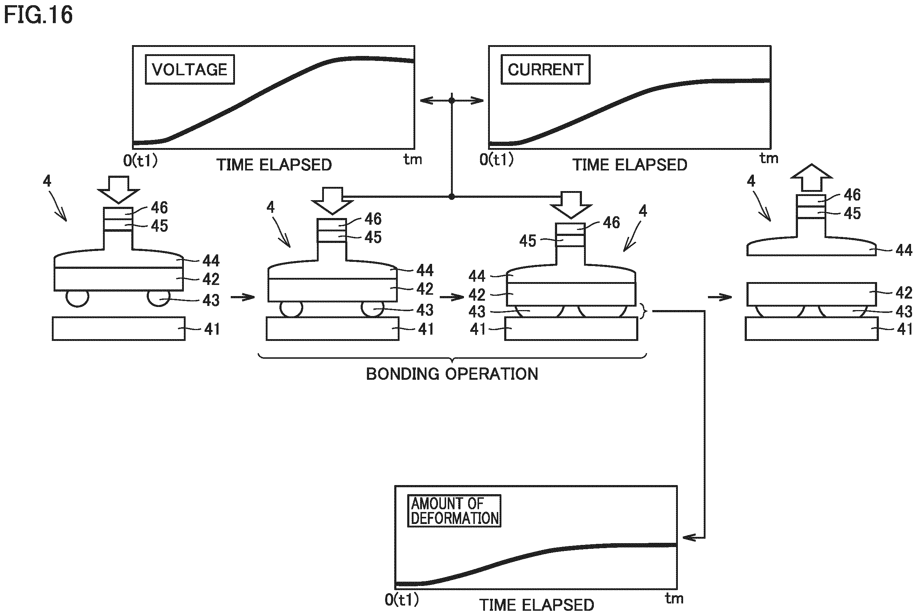

Fig. 16 shows another example of the manufacturing apparatus to be monitored. Fig. 16 shows a mounter 4 as the manufacturing apparatus to be monitored. Mounter 4 includes a chuck 44, a drive device 45, and a sensor group 46.
Chuck 44 holds a chip 42 having a bump 43 attached thereto. Drive device 45 controls generation of ultrasonic waves, upward/downward movement of chuck 44, and a force exerted by chuck 44 to hold chip 42. Sensor group 46 measures values of a variety of types of parameters indicating a status of mounter 4.
As shown in Fig. 16, drive device 45 lowers chuck 44 holding chip 42. When bump 43 comes into contact with a substrate 41, mounter 4 performs a bonding operation to bond bump 43 to substrate 41. Specifically, drive device 45 generates ultrasonic waves to encourage bonding between bump 43 and substrate 41, and further lowers chuck 44 while applying a load. When bump 43 is deformed by a predetermined amount, drive device 45 stops generating ultrasonic waves and reduces the force exerted by chuck 44 to hold chip 42. The bonding operation thus ends. Thereafter, drive device 45 raises chuck 44. Whenever chuck 44 holds a new chip 42, mounter 4 performs the above-described bonding operation.
Sensor group 46 measures a current and a voltage applied to drive device 45 and an amount by which bump 43 is deformed as parameters indicating a status of mounter 4. The amount by which bump 43 is deformed is represented by a distance between chip 42 and substrate 41.
When a target to be monitored is mounter 4, the anomaly detection device according to the second modification acquires standard values of a plurality of variables indicating a status of mounter 4 for a period of time with the bonding operation performed (hereinafter referred to as a "bonding operation period") while mounter 4 normally operates. For example, simulation unit 11 shown in Fig. 4 uses a virtual model of mounter 4 to simulate values of the plurality of variables while **mounter** 4 is simulatively operated according to a production plan, and the simulation unit acquires as the standard values the values of the plurality of variables acquired in the bonding operation through the simulation. Alternatively, data set selection unit 17 shown in Fig. 10 acquires, as the standard values, values of the plurality of variables acquired in a bonding period previously while mounter 4 normally operates. The plurality of variables include, for example, a voltage, a current, and an amount of deformation for each of times t1, t2, ..., and tm elapsing after the bonding operation period starts. In that case, the plurality of variables include 3 × m variables.
When the target to be monitored is mounter 4, collection unit 12 acquires actual values of the plurality of variables indicating a status of mounter 4 for each bonding period. Collection unit 12 may acquire the actual values of the plurality of variables from sensor group 46, or may acquire the actual values of the plurality of variables from a control device (e.g., a PLC) (not shown) that controls mounter 4.
Calculation unit 13, detection unit 14, selection unit 15, and analysis unit 16 use standard and actual values of the 3 × m variables to perform the process described in the above embodiment. For example, calculation unit 13 calculates a standard SN ratio as a statistic indicating the degree of deviation of the actual values of the 3 × m variables from the standard values of the 3 × m variables.

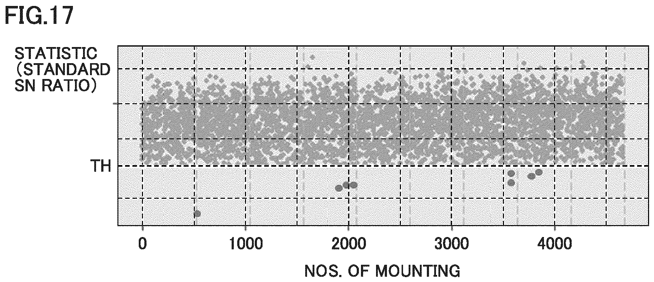

Fig. 17 represents a transition of a statistic calculated for each bonding operation. Fig. 17 shows a graph in which the horizontal axis indicates bonding operation numbers (or mounting numbers) and the vertical axis represents a statistic (or the standard SN ratio) calculated by calculation unit 13. Many of products manufactured through bonding operations with a standard SN ratio departing from a reference range (that is, smaller than threshold value TH) were confirmed to be defective. The user can confirm whether there is a defective product based on error notification received from detection unit 14.

(Another Example of Unit Interval)

In the above example, the unit interval is a period of time for which an operation of a manufacturing apparatus (an injection molding operation or a bonding operation) is performed. However, the unit interval is not limited thereto. For example, the unit interval may be each of a plurality of intervals included in a range that a physical quantity of a manufacturing apparatus can assume.

For example, when the manufacturing apparatus is injection molding machine 3 shown in Fig. 11, the screw's position can assume a range from the position of screw 33 shown in the upper part of Fig. 11 (represented by a distance D1) to the position of screw 33 shown in the lower part of Fig. 11 (represented by a distance D2). In that case, each of a plurality of intervals included in a range from distance D1 to distance D2 is set as a unit interval. For example, an interval for which distance D is D1-D3 and an interval for which distance D is D3-D2 are set as unit intervals.

Alternatively, an interval for which a physical quantity obtained from a tensile tester or a compression tester installed at a production site falls within a specific range may be set as a unit interval. For example, an interval for which a stress-strain diagram presents strain in an amount falling within a predetermined range is set as a unit interval. Alternatively, in a relationship between the cooling rate of a metal heated at a production site and the hardness of the metal, an interval for which the cooling rate falls within a predetermined range may be set as a unit interval.

§3. Additional Notes

As discussed above, the present embodiment includes the following disclosure.

(Configuration 1)

An anomaly detection device (100, 100A) comprising:

an acquisition unit (101, 11, 17) configured to acquire standard values of a plurality of variables for each unit time, the plurality of variables indicating a status of a production line (2), the standard values being acquired while the production line (2) normally operates;
a collection unit (101, 12) configured to collect actual values of the plurality of variables for the unit time;
a calculation unit (101, 13) configured to calculate for the unit time a statistic representing a degree of deviation of the actual values of the plurality of variables from the standard values of the plurality of variables; and
a detection unit (101, 14) configured to detect that the production line has an anomaly in response to the statistic departing from a reference range.

(Configuration 2)

An anomaly detection device (100, 100A) comprising:

an acquisition unit (101, 11, 17) configured to acquire standard values of a plurality of variables for a unit interval, the plurality of variables indicating a status of a target to be monitored (2, 3, 4) at a production site, the standard values being acquired while the target to be monitored (2, 3, 4) normally operates;
a collection unit (101, 12) configured to collect actual values of the plurality of variables in the unit interval;
a calculation unit (101, 13) configured to calculate a statistic representing a degree of deviation of the actual values of the plurality of variables from the standard values of the plurality of variables; and
a detection unit (101, 14) configured to detect that the target to be monitored has an anomaly in response to the statistic departing from a reference range.

(Configuration 3)

The anomaly detection device according to Configuration 1 or 2, further comprising a selection unit (101, 15) configured to select from the plurality of variables an effective variable having a relatively large degree of influence on the statistic.

(Configuration 4)

The anomaly detection device (100, 100A) according to Configuration 3, wherein the selection unit (101, 15) is configured to select, as the effective variable, a variable effective in improving estimation accuracy of a T-method estimation model in which the plurality of variables are explanatory variables and the statistic is an objective variable.

(Configuration 5)

The anomaly detection device (100, 100A) according to Configuration 3 or 4, further comprising an analysis unit (101, 16) configured to perform a principal component analysis using the actual value of the effective variable and the statistic for the unit time.

(Configuration 6)

The anomaly detection device (100, 100A) according to Configuration 3 or 4, further comprising an analysis unit (101, 16) configured to perform a principal component analysis using the actual value of the effective variable and the statistic for the unit interval.

(Configuration 7)

The anomaly detection device (100, 100A) according to Configuration 5 or 6, wherein the analysis unit (101, 16) is configured to:

select two principal components that maximize a variance of the statistic; and
determine a degree of influence of the effective variable on the standard SN ratio based on a principal component loading in each of the effective variable and the statistic for the two principal components.

(Configuration 8)

The anomaly detection device (100) according to any one of Configurations 1 and 3 to 7, wherein the acquisition unit (101, 11) is configured to:

use a virtual model (2M) of the production line (2) to simulate values of the plurality of variables while the production line (2) is simulatively operated according to a production plan; and
acquire as the standard value a value acquired through the simulation for the unit time.

(Configuration 9)

The anomaly detection device (100) according to any one of Configurations 2 to 7, wherein the acquisition unit (101, 11) is configured to:

use a virtual model (2M) of the target to be monitored (2, 3, 4) to simulate values of the plurality of variables while the target to be monitored (2, 3, 4) is simulatively operated according to a production plan; and
acquire as the standard value a value acquired through the simulation for the unit interval.

(Configuration 10)

The anomaly detection device (100A) according to any one of Configurations 1 and 3 to 7, wherein the acquisition unit (101, 17) is configured to acquire, as the standard values, values of the plurality of variables for the unit time that are acquired previously while the production line (2) normally operates.

(Configuration 11)

The anomaly detection device (100A) according to any one of Configurations 2 to 7, wherein the acquisition unit (101, 17) is configured to acquire, as the standard values, values of the plurality of variables acquired in the unit interval previously while the target to be monitored (2, 3, 4) normally operates.

(Configuration 12)

The anomaly detection device (100, 100A) according to any one of Configurations 1 to 11, wherein the statistic is a standard SN ratio.

(Configuration 13)

The anomaly detection device (100, 100A) according to any of Configurations 1 and 3 to 12, wherein

the target to be monitored is a production line (2), and
the unit interval is a unit time.

(Configuration 14)

The anomaly detection device (100, 100A) according to any one of Configurations 2 to 12, wherein the target to be monitored includes a manufacturing apparatus (3, 4).

(Configuration 15)

The anomaly detection device (100, 100A) according to Configuration 14, wherein

the manufacturing apparatus (3, 4) repeatedly performs a target operation, and
the unit interval is a period of time for which the target operation is performed.

(Configuration 16)

An anomaly detection method comprising:

acquiring standard values of a plurality of variables for each unit time, the plurality of variables indicating a status of a production line (2), the standard values being acquired while the production line (2) normally operates (S1);
collecting actual values of the plurality of variables for the unit time (S2);
calculating for the unit time a statistic representing a degree of deviation of the actual values of the plurality of variables from the standard values of the plurality of variables (S3); and
detecting that the production line has an anomaly in response to the statistic departing from a reference range (S6).

(Configuration 17)

A program (131, 132) configured to cause a computer (101) to perform an anomaly detection method, the anomaly detection method comprising:

acquiring standard values of a plurality of variables for each unit time, the plurality of variables indicating a status of a production line (2), the standard values being acquired while the production line (2) normally operates (S1);
collecting actual values of the plurality of variables for the unit time (S2);
calculating for the unit time a statistic representing a degree of deviation of the actual values of the plurality of variables from the standard values of the plurality of variables (S3); and
detecting that the production line has an anomaly in response to the statistic departing from a reference range (S6).

(Configuration 18)

An anomaly detection method comprising:

acquiring standard values of a plurality of variables for a unit interval, the plurality of variables indicating a status of a target to be monitored (2, 3, 4) at a production site, the standard values being acquired while the target to be monitored (2, 3, 4) normally operates (S 1);
collecting actual values of the plurality of variables in the unit interval (S2);
calculating a statistic representing a degree of deviation of the actual values of the plurality of variables from the standard values of the plurality of variables (S3); and
detecting that the target to be monitored has an anomaly in response to the statistic departing from a reference range (S6).

(Configuration 19)

A program (131, 132) configured to cause a computer to perform an anomaly detection method, the anomaly detection method comprising:

acquiring standard values of a plurality of variables for a unit interval, the plurality of variables indicating a status of a target to be monitored (2, 3, 4) at a production site, the standard values being obtained while the target to be monitored (2, 3, 4) normally operates (S1);
collecting actual values of the plurality of variables in the unit interval (S2);
calculating a statistic representing a degree of deviation of the actual values of the plurality of variables from the standard values of the plurality of variables (S3); and
detecting that the target to be monitored has an anomaly in response to the statistic departing from a reference range (S6).

While embodiments of the present invention have been described, it should be understood that the embodiments disclosed herein are illustrative and non-restrictive in any respect. The scope of the present invention is defined by the terms of the claims, and is intended to encompass any modification equivalent in meaning and scope to the terms of the claims.

REFERENCE SIGNS LIST

1 system, 2 production line, 2M virtual model, 3 injection molding machine, 4 mounter, 11 simulation unit, 12 collection unit, 13 calculation unit, 14 detection unit, 15 selection unit, 16 analysis unit, 17 data set selection unit, 18 performance database, 21 cutting step, 21M first model, 21a cutting device, 21b, 22c timer, 21c, 21d, 22d, 23c counter, 22 part shipping step, 22M second model, 22a, 23a, 23b sensor, 22b automatic guided vehicle, 23 assembly step, 23M third model, 24 product shipping step, 30 graph, 31 mold, 32 cylinder, 33 screw, 34 hopper, 35 screw driving device, 36, 46 sensor group, 40 biplot, 41 substrate, 42 chip, 43 bump, 44 chuck, 45 drive device, 70 display device, 75 input device, 100, 100A anomaly detection device, 101 processor, 102 memory, 103 storage, 104 display controller, 105 input interface, 106 communication interface, 131 anomaly detection program, 132 simulation program.

**Claims**

1.  An anomaly detection device comprising:

an acquisition unit configured to acquire standard values of a plurality of variables for a unit interval, the plurality of variables indicating a status of a target to be monitored at a production site, the standard values being acquired while the target to be monitored normally operates;
a collection unit configured to collect actual values of the plurality of variables in the unit interval;
a calculation unit configured to calculate a statistic representing a degree of deviation of the actual values of the plurality of variables from the standard values of the plurality of variables; and
a detection unit configured to detect that the target to be monitored has an anomaly in response to the statistic departing from a reference range.

2.  The anomaly detection device according to claim 1, further comprising a selection unit configured to select from the plurality of variables an effective variable having a relatively large degree of influence on the statistic.

3.  The anomaly detection device according to claim 2, wherein the selection unit is configured to select, as the effective variable, a variable effective in improving estimation accuracy of a T-method estimation model in which the plurality of variables are explanatory variables and the statistic is an objective variable.

4.  The anomaly detection device according to claim 2, further comprising an analysis unit configured to perform a principal component analysis using the actual value of the effective variable and the statistic for the unit interval.

5.  The anomaly detection device according to claim 4, wherein the analysis unit is configured to:

select two principal components that maximize a variance of the statistic; and
determine a degree of influence of the effective variable on the statistic based on a principal component loading in each of the effective variable and the statistic for the two principal components.

6. The anomaly detection device according to claim 1, wherein the acquisition unit is configured to:

use a virtual model of the target to be monitored to simulate values of the plurality of variables while the target to be monitored is simulatively operated according to a production plan; and
acquire as the standard value a value acquired through the simulation for the unit interval.

7. The anomaly detection device according to claim 1, wherein the acquisition unit is configured to acquire, as the standard values, values of the plurality of variables acquired in the unit interval previously while the target to be monitored normally operates.

8. The anomaly detection device according to claim 1, wherein the statistic is a standard SN ratio.

9. The anomaly detection device according to any one of claims 1 to 8, wherein

the target to be monitored is a production line, and
the unit interval is a unit time.

10. The anomaly detection device according to any one of claims 1 to 8, wherein the target to be monitored includes a manufacturing apparatus.

11. The anomaly detection device according to claim 10, wherein

the manufacturing apparatus repeatedly performs a target operation, and
the unit interval is a period of time for which the target operation is performed.

12. An anomaly detection method comprising:

acquiring standard values of a plurality of variables for a unit interval, the plurality of variables indicating a status of a target to be monitored at a production site, the standard values being acquired while the target to be monitored normally operates;
collecting actual values of the plurality of variables in the unit interval;
calculating a statistic representing a degree of deviation of the actual values of the plurality of variables from the standard values of the plurality of variables; and
detecting that the target to be monitored has an anomaly in response to the statistic departing from a reference range.

13. A program configured to cause a computer to perform an anomaly detection method, the anomaly detection method comprising:

acquiring standard values of a plurality of variables for a unit interval, the plurality of variables indicating a status of a target to be monitored at a production site, the standard values being acquired while the target to be monitored normally operates;
collecting actual values of the plurality of variables in the unit interval;
calculating a statistic representing a degree of deviation of the actual values of the plurality of variables from the standard values of the plurality of variables; and
detecting that the target to be monitored has an anomaly in response to the statistic departing from a reference range.

FIG.1

VARIABLE

ACTUAL VALUE

STANDARD VALUE

TIME

(3) CALCULATE A STATISTIC REPRESENTING A DEGREE OF DEVIATION

STATISTIC (STANDARD SN RATIO)

REFERENCE RANGE

TH

TIME

(1) ACQUIRE STANDARD VALUE FOR EACH UNIT TIME

(2) COLLECT ACTUAL VALUE FOR EACH UNIT TIME

(4) DETECT OCCURRENCE OF ANOMALY

ANOMALY DETECTION DEVICE — 100

PRODUCTION LINE — 2

1

EP 4 535 104 A1

FIG.2

EP 4 535 104 A1

FIG.3

ANOMALY DETECTION DEVICE — 100

PROCESSOR — 101

MEMORY — 102

STORAGE — 103

ANOMALY DETECTION PROGRAM — 131

SIMULATION PROGRAM — 132

DISPLAY CONTROLLER — 104

DISPLAY DEVICE — 70

INPUT INTERFACE — 105

INPUT DEVICE — 75

COMMUNICATION INTERFACE — 106

PRODUCTION LINE

FIG.4

ANOMALY DETECTION DEVICE — 100

SIMULATION UNIT — 11

COLLECTION UNIT — 12

CALCULATION UNIT — 13

DETECTION UNIT — 14

SELECTION UNIT — 15

ANALYSIS UNIT — 16

FIG.5

# FIG.6

FIG.7

DEGREE OF INFLUENCE
(SN RATIO $\eta$) ON
OBJECTIVE VARIABLE
(STANDARD SN RATIO)

| AGV OPERATION TIME | NO. OF CUTTING DEVICES | NO. OF PERSONNEL FOR SHIPPING PARTS | CUTTING TIME | ASSEMBLY YIELD | CUTTING YIELD | .. |

FIG.8

CUTTING TIME

NO. OF DEVICES

AGV OPERATION TIME

NO. OF PERSONNEL
(FOR PART SHIPPING STEP)

STANDARD SN RATIO

PCA

40

1ST PRINCIPAL
COMPONENT

● STANDARD SN RATIO : LOW  ◐ STANDARD SN RATIO : MIDDLE
○ STANDARD SN RATIO : HIGH

AGV
OPERATION TIME          v1
CUTTING TIME
v4                      NO. OF PERSONNEL
                        FOR SHIPPING PARTS
                                            v3
NO. OF DEVICES
                                        v0
                        STANDARD SN RATIO
v2
                                    2ND PRINCIPAL
                                    COMPONENT

FIG.9

```
                    ┌─────────┐
                    │  START  │
                    └─────────┘
                         │
    ┌────────────────────┤                              ┌─S1
    │    ┌────────────────▼─────────────────────────────┐
    │    │ ACQUIRE STANDARD VALUES OF A PLURALITY        │
    │    │ OF VARIABLES FOR EACH UNIT TIME, THE          │
    │    │ PLURALITY OF VARIABLES INDICATING A STATUS    │
    │    │ OF A PRODUCTION LINE, THE STANDARD VALUES     │
    │    │ BEING ACQUIRED WHILE THE PRODUCTION LINE      │
    │    │ NORMALLY OPERATES                             │
    │    └────────────────┬─────────────────────────────┘
    │                     │                              ┌─S2
    │    ┌────────────────▼─────────────────────────────┐
    │    │ COLLECT ACTUAL VALUES OF THE PLURALITY OF     │
    │    │ VARIABLES FOR EACH UNIT TIME                  │
    │    └────────────────┬─────────────────────────────┘
    │                     │                              ┌─S3
    │    ┌────────────────▼─────────────────────────────┐
    │    │ CALCULATE A STATISTIC (A STANDARD SN RATIO)   │
    │    │ REPRESENTING A DEGREE OF DEVIATION OF THE     │
    │    │ ACTUAL VALUES OF THE PLURALITY OF VARIABLES   │
    │    │ FROM THE STANDARD VALUES OF THE PLURALITY     │
    │    │ OF VARIABLES                                  │
    │    └────────────────┬─────────────────────────────┘
    │                     │                              ┌─S4
    │    ┌────────────────▼─────────────────────────────┐
    │    │ DISPLAY TRANSITION OF THE STANDARD SN         │
    │    │ RATIO ON A MONITOR                            │
    │    └────────────────┬─────────────────────────────┘
    │                     │                              ┌─S5
    │         ┌───────────▼───────────────────┐  NO
    │         │ THE STANDARD SN RATIO          ├──────────►
    │         │ DEPARTING FROM A REFERENCE     │
    │         │ RANGE (< THRESHOLD VALUE TH)   │
    │         └───────────┬───────────────────┘
    │                     │ YES                          ┌─S6
    │    ┌────────────────▼─────────────────────────────┐
    │    │ ISSUE NOTIFICATION OF OCCURRENCE OF           │
    │    │ ANOMALY                                       │
    │    └────────────────┬─────────────────────────────┘
    │                     │                              ┌─S7
    │    ┌────────────────▼─────────────────────────────┐
    │    │ SELECT FROM THE PLURALITY OF VARIABLES AN     │
    │    │ EFFECTIVE VARIABLE EFFECTIVE IN IMPROVING     │
    │    │ ESTIMATED ACCURACY OF THE STANDARD SN RATIO   │
    │    └────────────────┬─────────────────────────────┘
    │                     │                              ┌─S8
    │    ┌────────────────▼─────────────────────────────┐
    │    │ PRINCIPAL COMPONENT ANALYSIS                  │
    │    └────────────────┬─────────────────────────────┘
    │                     │                              ┌─S9
    │    ┌────────────────▼─────────────────────────────┐
    │    │ DISPLAY RESULT OF ANALYSIS                    │
    │    └────────────────┬─────────────────────────────┘
    │                     │                              ┌─S10
    │         ┌───────────▼───────────────────┐  NO
    │         │ REVIEW OF PRODUCTION PLAN      ├──────────►
    │         └───────────┬───────────────────┘
    │                     │ YES
    └─────────────────────┘
```

FIG.10

ANOMALY DETECTION
DEVICE

100A

| DATA SET SELECTION UNIT |
17

| PERFORMANCE DB |
18

| COLLECTION UNIT |
12

| CALCULATION UNIT |
13

| DETECTION UNIT |
14

| SELECTION UNIT |
15

| ANALYSIS UNIT |
16

FIG.11

EP 4 535 104 A1

FIG.12

SCREW'S POSITION,
INJECTION PRESSURE,
INJECTION SPEED

38(INJECTION PRESSURE)

39(INJECTION SPEED)

37(SCREW'S POSITION)

0

0        200        400        600

TIME ELAPSED

FIG.13

SCREW'S POSITION,
INJECTION PRESSURE,
INJECTION SPEED

38a

38b

37a,37b        39b

0

39a

0(t1)   •••   tk   •••   tn

TIME ELAPSED

STANDARD SN RATIO

FIG.14

NOS. OF INJECTION MOLDING OPERATION

FIG.15

EP 4 535 104 A1

FIG.16

VOLTAGE

0(t1)   TIME ELAPSED   tm

CURRENT

0(t1)   TIME ELAPSED   tm

BONDING OPERATION

AMOUNT OF DEFORMATION

0(t1)   TIME ELAPSED   tm

EP 4 535 104 A1

FIG.17

STATISTIC
(STANDARD
SN RATIO)

TH

0          1000          2000          3000          4000

NOS. OF MOUNTING

## INTERNATIONAL SEARCH REPORT

| International application No. |
| --- |
| **PCT/JP2023/017281** |

**A. CLASSIFICATION OF SUBJECT MATTER**

*G05B 19/418*(2006.01)i
FI: G05B19/418 Z

According to International Patent Classification (IPC) or to both national classification and IPC

**B. FIELDS SEARCHED**

Minimum documentation searched (classification system followed by classification symbols)

G05B19/418

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-49940 A (YASKAWA INFORMATION SYSTEMS CO., LTD.) 28 March 2019 (2019-03-28) | 1, 7, 9-13 |
| | paragraphs [0018]-[0026] | |
| Y | paragraphs [0018]-[0026] | 2-6, 8 |
| X | JP 5151556 B2 (OMRON CORP.) 27 February 2013 (2013-02-27) | 1, 7, 9-13 |
| | paragraphs [0086]-[0104] | |
| Y | paragraphs [0086]-[0104] | 2-6, 8 |
| X | JP 5986531 B2 (HITACHI, LTD.) 06 September 2016 (2016-09-06) | 1, 7, 9-13 |
| | paragraph [0011] | |
| Y | paragraph [0011] | 2-6, 8 |
| X | JP 7-43702 B2 (NIPPON STEEL CORP.) 15 May 1995 (1995-05-15) | 1, 7, 9-13 |
| | column 3, line 3 to column 5, line 6 | |
| Y | column 3, line 3 to column 5, line 6 | 2-6, 8 |
| Y | JP 2003-67033 A (TRINITY IND. CORP.) 07 March 2003 (2003-03-07) | 2-6, 8 |
| | paragraph [0009] | |

✓ Further documents are listed in the continuation of Box C.      ✓ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 May 2023** | **20 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/017281** |

**C.  DOCUMENTS CONSIDERED TO BE RELEVANT**

| Category* | Citation of document, with indication, where appropriate, of the relevant passages | Relevant to claim No. |
|---|---|---|
| Y | JP 6477423 B2 (OMRON CORP.) 06 March 2019 (2019-03-06)<br>paragraph [0042] | 2-6, 8 |
| Y | WO 2012/176520 A1 (YANMAR CO., LTD.) 27 December 2012 (2012-12-27)<br>paragraph [0033] | 3, 5-6, 8 |
| Y | JP 2019-101644 A (HITACHI, LTD.) 24 June 2019 (2019-06-24)<br>claim 5 | 5, 6, 8 |
| Y | WO 2022/03878 A1 (MITSUBISHI ELECTRIC CORP.) 06 January 2022 (2022-01-06)<br>paragraph [0041] | 6, 8 |
| Y | JP 2018-151913 A (RICOH CO., LTD.) 27 September 2018 (2018-09-27)<br>paragraphs [0069], [0095] | 8 |
| A | JP 6364800 B2 (OMRON CORP.) 01 August 2018 (2018-08-01) | 1-13 |
| A | JP 2020-170327 A (TOYOTA CENTRAL R&D LABS., INC.) 15 October 2020 (2020-10-15) | 1-13 |
| A | JP 2021-189743 A (HITACHI, LTD.) 13 December 2021 (2021-12-13) | 1-13 |
| A | JP 2001-147713 A (CANON INC.) 29 May 2001 (2001-05-29) | 1-13 |
| A | WO 2021/241580 A1 (DAICEL CORP.) 02 December 2021 (2021-12-02) | 1-13 |
| A | WO 2019/240019 A1 (PANASONIC INTELLECTUAL PROPERTY MANAGEMENT CO., LTD.) 19 December 2019 (2019-12-19) | 1-13 |

Form PCT/ISA/210 (second sheet) (January 2015)

## INTERNATIONAL SEARCH REPORT
### Information on patent family members

International application No.

**PCT/JP2023/017281**

| Patent document cited in search report | | | Publication date (day/month/year) | Patent family member(s) | | | Publication date (day/month/year) |
|---|---|---|---|---|---|---|---|
| JP | 2019-49940 | A | 28 March 2019 | (Family: none) | | | |
| JP | 5151556 | B2 | 27 February 2013 | (Family: none) | | | |
| JP | 5986531 | B2 | 06 September 2016 | US paragraph [0011] CN | 2014/0297374 104077645 | A1 A | |
| JP | 7-43702 | B2 | 15 May 1995 | (Family: none) | | | |
| JP | 2003-67033 | A | 07 March 2003 | (Family: none) | | | |
| JP | 6477423 | B2 | 06 March 2019 | (Family: none) | | | |
| WO | 2012/176520 | A1 | 27 December 2012 | US paragraph [0057] EP | 2014/0136299 2725440 | A1 A1 | |
| JP | 2019-101644 | A | 24 June 2019 | US claim 5 EP | 2019/0164101 3493126 | A1 A1 | |
| WO | 2022/03878 | A1 | 06 January 2022 | CN | 115485638 | A | |
| JP | 2018-151913 | A | 27 September 2018 | (Family: none) | | | |
| JP | 6364800 | B2 | 01 August 2018 | US WO EP | 2016/0342392 2015/118946 3106949 | A1 A1 A1 | |
| JP | 2020-170327 | A | 15 October 2020 | (Family: none) | | | |
| JP | 2021-189743 | A | 13 December 2021 | US | 2021/0374771 | A1 | |
| JP | 2001-147713 | A | 29 May 2001 | (Family: none) | | | |
| WO | 2021/241580 | A1 | 02 December 2021 | (Family: none) | | | |
| WO | 2019/240019 | A1 | 19 December 2019 | US CN | 2021/0208578 112262353 | A1 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019177783 A
- JP 2003044115 A

**Non-patent literature cited in the description**

- **KISHIO TAMURA**. Chapter 5. MT system capable of determining directions - TS method and T method. *Standardization and Quality Control*, 2009, vol. 62 (2)
- **GENICHI TAGUCHI**. Objective Function and Generic Function (6) - Prediction by T Method. *Quality Engineering*, 2005, vol. 13 (3), 5-10
- *Idea and Utilization of Quality Engineering in Development and Design Phase - Prototypeless and Testless System Evaluation and Improvement*, 22 March 2023, https://foundry.jp/bukai/wp-content/uploads/2012/07/e4806f10b0797ec0932d9317d-d92a533.pdf
- *Idea and Utilization of Quality Engineering in Development and Design Phase - Prototypeless and Testless System Evaluation and Improvement*, 04 January 2022, https://foundry.jp/bukai/wp-content/uploads/2012/07/e4806f10b0797ec0932d9317d-d92a533.pdf